# FASCICULE DE BREVET EUROPEEN

(11) **EP 3 480 622 B1**
(45) Date de publication et mention de la délivrance du brevet: **19.05.2021**
(21) Numéro de dépôt: 18200497.8
(22) Date de dépôt: 15.10.2018
(51) Int. Cl.: G01S 13/00, G01S 13/48, G01S 13/524, G01S 13/87, G01S 19/14, G01S 13/02

(54) **PROCÉDÉ DE DÉTECTION DE CIBLE PAR RÉFLECTOMETRIE GNSS ET SYSTÈME ASSOCIÉ**
ZIELERFASSUNGSVERFAHREN DURCH GNSS-REFLEKTOMETRIE, UND ENTSPRECHENDES SYSTEM
METHOD OF DETECTING TARGET BY GNSS REFLECTOMETRY AND ASSOCIATED SYSTEM

(30) Priorité: 07.11.2017 FR 1701143
(43) Date de publication de la demande: 08.05.2019
(73) Titulaire: Thales, 92400 Courbevoie (FR)
(72) Inventeur: CALMETTES, Thibaud, 31450 MONTGISCARD (FR); CARRIE, Guillaume, 31190 LABRUYERE DORSA (FR); MONNERAT, Michel, 31240 SAINT JEAN (FR)
(74) Mandataire: Marks & Clerk France

(56) Documents cités:
- FR-A1- 2 972 806
- UNWIN M ET AL: "Implementing GNSS-Reflectometry in Space on the TechDemoSat-1 Mission", GNSS 2014 - PROCEEDINGS OF THE 27TH INTERNATIONAL TECHNICAL MEETING OF THE SATELLITE DIVISION OF THE INSTITUTE OF NAVIGATION (ION GNSS+ 2014), THE INSTITUTE OF NAVIGATION, 8551 RIXLEW LANE SUITE 360 MANASSAS, VA 20109, USA, 12 septembre 2014 (2014-09-12), pages 1222-1235, XP056007874,
- BROWN ALISON ET AL: "Remote Sensing Using Bistatic GPS and a Digital Beam Steering Receiver", GNSS 2005 - PROCEEDINGS OF THE 18TH INTERNATIONAL TECHNICAL MEETING OF THE SATELLITE DIVISION OF THE INSTITUTE OF NAVIGATION (ION GNSS 2005), THE INSTITUTE OF NAVIGATION, 8551 RIXLEW LANE SUITE 360 MANASSAS, VA 20109, USA, 16 septembre 2005 (2005-09-16), pages 2511-2516, XP056009564,
- BROWN ALLISON ET AL: "Test Results from a Novel Passive Bistatic GPS Radar Using a Phased Sensor Array", NTM 2007 - PROCEEDINGS OF THE 2007 NATIONAL TECHNICAL MEETING OF THE INSTITUTE OF NAVIGATION, THE INSTITUTE OF NAVIGATION, 8551 RIXLEW LANE SUITE 360 MANASSAS, VA 20109, USA, 24 janvier 2007 (2007-01-24), pages 504-509, XP056005010,

## Description

L'invention porte sur un procédé de détection d'une cible par réflectométrie GNSS.

On entend par cible un élément possédant des caractéristiques de réflexion différentes de celles de la surface sur laquelle il se trouve. Ces caractéristiques de réflexion différentes peuvent être dues, de manière non limitative, à une géométrie différente (e.g. pic de glace sur une étendue plane de glace) ou à une composition différente (e.g. structure métallique sur une étendue d'eau).

Les caractéristiques de réflexion peuvent être de type spéculaire ou diffuse, ou toute combinaison de celles-ci.

La réflectométrie GNSS est une technique de télédétection originale et opportuniste qui consiste à analyser les ondes électromagnétiques émises en continu par la soixantaine de satellites des systèmes de positionnement GNSS (GALILEO, GPS, GLONASS, ...), qui sont captées par une antenne après réflexion sur la surface de la Terre. Ces signaux interagissent avec la surface réfléchissante et contiennent donc des informations sur ses propriétés, que l'on peut observer dans le signal reçu après réflexion. Si la faisabilité et l'intérêt de cette méthode ne sont plus à démontrer, en particulier dans des domaines aéronautiques la mise en œuvre de cette technique pose un certain nombre de problèmes dans un contexte spatial.

Le GNSS est donc utilisé comme un radar, et reçoit l'écho après rebond sur la surface de la Terre, et de déduire de l'analyse de l'écho les caractéristiques de la surface.

C'est une alternative intéressante au radar, au moins pour des applications de faible coût, notamment parce qu'il n'est pas nécessaire de payer la source (l'émetteur du radar, avec tout ce que ça coûte en termes de consommation), ainsi qu'elle est continûment disponible (pas besoin d'attendre la revisite du satellite ou du porteur du radar).

Il est par exemple connu le document FR 2972806 A1 qui porte sur un procédé de détection et de localisation d'un objet au sein d'une surface d'observation, le procédé mettant en œuvre la réception, par une plateforme de réception en déplacement lors d'une période d'observation de la surface d'observation, d'un signal d'opportunité après réflexion de celui-ci sur la surface d'observation.

Il est également connu le document UNWIN MET AL: "Implementing GNSS- reflectometry in Space on the TechDemoSat-1 Mission",GNSS 2014- PROCEEDINGS OF THE 27TH INTERNATIONAL TECHNICAL MEETING OF THE SATELLITE DIVISION OF THE INSTITUTE OF NAVIGATION (ION GNSS+ 2014), THE INSTITUTE OF NAVIGATION, 8551 RIXLEW LANE SUITE 360 MANASSAS, VA 201 09, USA, 12 septembre 2014, pages 1222-1235, XP056007874.

La réflectométrie GNSS est utilisée depuis plusieurs années, dans un cadre aéroporté, par exemple dans l'agriculture et la surveillance des forêts.

Cependant, le bilan de liaisons n'est pas suffisant pour une implémentation simple de réflectométrie GNSS sur des satellites classiques en orbites basse, dites LEO pour acronyme de "Low Earth Orbit" en langue anglaise, généralement considérées comme inférieures à 2000 km.

En l'espèce, une cible peut être un navire sur l'océan (petite surface de réflexion spéculaire au milieu d'une surface globalement en réflexion diffuse), une partie d'un pôle non couvert de glace (petite surface de réflexion diffuse au milieu d'une surface globalement en réflexion spéculaire).

Un but de l'invention est de pallier les problèmes précédemment cités.

Il est proposé, selon un aspect de l'invention, un procédé itératif de détection par au moins un satellite récepteur en orbite d'une cible possédant des caractéristiques de réflexion différentes de celles de la surface sur laquelle elle se trouve, par réflectométrie GNSS, dans lequel les signaux GNSS réfléchis sont reçus par une antenne active du satellite récepteur comprenant une pluralité d'éléments d'antenne, comprenant une étape de détermination d'hypothèses de positions de la cible pour lesquelles on souhaite détecter la cible, pour chaque hypothèse de position de la cible, on effectue les étapes de :
- détermination d'un intervalle temporel au cours duquel ladite hypothèse de position de la cible est visible du satellite récepteur, et découpage de cet intervalle temporel en segments temporels, pour chacun desquels on effectue les étapes de :
   - détermination de la direction d'arrivée des signaux GNNS réfléchis issus de ladite hypothèse de position de la cible à partir de la position orbitale du satellite récepteur ;
   - détermination de la position orbitale des satellites GNSS selon leurs éphémérides, puis des directions d'arrivée des signaux GNSS directs des satellites GNSS visibles sur un récepteur GNSS du satellite, et de l'écho perturbateur de réflexion spéculaire des signaux GNSS sur la surface sur laquelle se trouve la cible ;
   - corrélation, pour chaque satellite GNSS visible, de l'hypothèse de position de la cible, sur le code GNSS correspondant à ce satellite GNSS, et formation de faisceaux par l'antenne active en maximisant le gain de l'antenne active du satellite récepteur dans la direction d'arrivée des signaux issus de l'hypothèse de position de la cible, et en minimisant le gain de l'antenne active dans les directions d'arrivée des signaux directs des satellites GNSS visibles sur le récepteur GNSS et de l'écho perturbateur de réflexion spéculaire sur ladite surface sur laquelle se trouve la cible ;
   - détermination du temps d'arrivée et de la variation temporelle de la phase d'arrivée attendus des signaux GNSS potentiellement réfléchis sur la cible, et moyenne sur les satellites GNSS visibles de la corrélation sur le code GNSS pour les temps d'arrivée et variation temporelle de la phase d'arrivée, à partir de la position orbitale dudit satellite récepteur et de ses évolutions et des positions orbitales des satellites GNSS visibles de l'hypothèse de position de la cible et de leurs évolutions ; et
   - moyenne sur les segments temporels desdites moyennes de corrélation sur les satellites GNSS ;
   - détermination de la présence de la cible à l'hypothèse de position par comparaison de ladite moyenne sur les segments temporels avec une valeur de référence.

Ainsi, le procédé permet de pouvoir utiliser des signaux GNSS pour localiser une cible.

Dans un mode de mise en œuvre, la position orbitale du satellite récepteur est déterminée à partir d'un récepteur GNSS placé sur ledit satellite.

Ainsi, le satellite dispose non seulement d'un moyen de connaître sa position, mais également d'une capacité pour collecter les éphémérides des satellites GNSS nécessaires aux calculs géométriques permettant d'évaluer les géométries de réception et les variations temporelles des caractéristiques des signaux reçus.

Dans un mode de mise en œuvre, la valeur de référence de l'étape de détermination de la présence de la cible est prédéterminée.

Ainsi, il est possible d'identifier la présence d'une cible particulièrement réflexive (respectivement diffuse) par l'observation d'une forte (respectivement faible) cohérence des signaux reçus de cette direction. Cela peut notamment être utile dans un contexte expérimental, ou de début de fonctionnement de satellite, afin de fixer les sensibilités des algorithmes sur certains points connus.

Selon un mode de mise en œuvre, la valeur de référence de l'étape de détermination de la présence de la cible est adaptative.

Ainsi, il est possible d'adapter les seuils à l'environnement observé, par exemple définir des seuils de détections plus élevés dans les zones maritimes avec beaucoup de bateaux pour identifier seulement sans confusion des cibles plus grandes, et revenir à des seuils plus faibles pour détecter des cibles plus petites lorsque les risques de confusions sont moindres.

Dans un mode de mise en œuvre, la cible est un bateau sur une étendue d'eau.

En variante, la cible est une surface non couverte de glace à un Pôle de la Terre.

Il est également proposé, selon un autre aspect de l'invention, un système de détection par satellite en orbite d'une cible possédant des caractéristiques de réflexion différentes de celles de la surface sur laquelle elle se trouve, par réflectométrie GNSS, adapté pour mettre en œuvre le procédé tel que décrit ci-dessus.

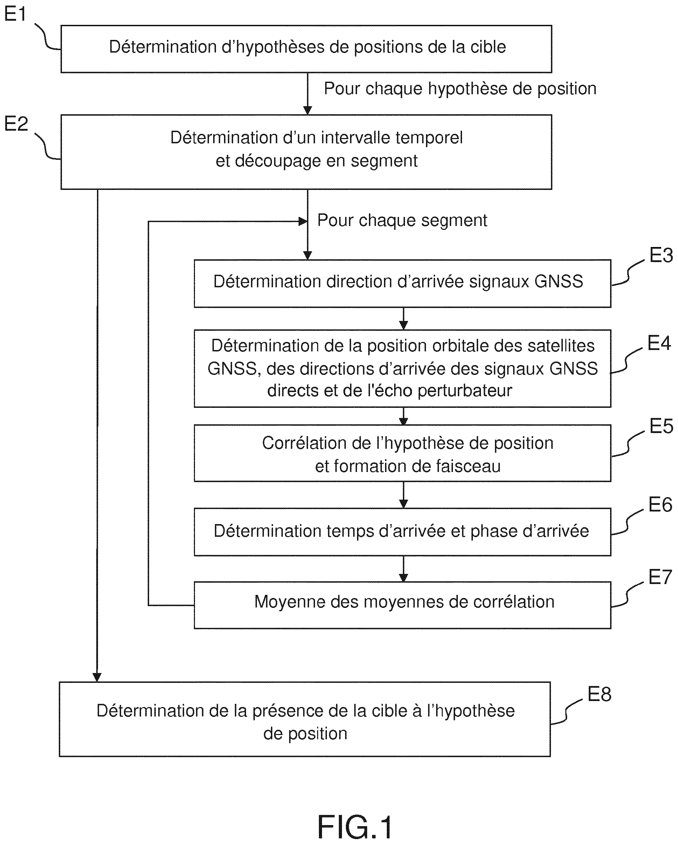

L'invention sera mieux comprise à l'étude de quelques modes de réalisation décrits à titre d'exemples nullement limitatifs et illustrés par le dessin sur lequel la figure 1 illustre schématiquement un mode de mise en œuvre du procédé selon un aspect de l'invention.

Le procédé itératif de détection par au moins un satellite récepteur en orbite d'une cible possédant des caractéristiques de réflexion différentes de celles de la surface sur laquelle elle se trouve, par réflectométrie GNSS, dans lequel les signaux GNSS réfléchis sont reçus par une antenne active du satellite récepteur comprenant une pluralité d'éléments d'antenne, comprenant une étape de détermination E1 d'hypothèses de positions de la cible pour lesquelles on souhaite détecter la cible, pour chaque hypothèse de position de la cible, on effectue les étapes de :
- détermination E2 d'un intervalle temporel au cours duquel ladite hypothèse de position de la cible est visible du satellite récepteur, et découpage de cet intervalle temporel en segments temporels, pour chacun desquels on effectue les étapes de :
   - détermination E3 de la direction d'arrivée des signaux GNSS réfléchis issus de ladite hypothèse de position de la cible à partir de la position orbitale du satellite récepteur ;
   - détermination E4 de la position orbitale des satellites GNSS selon leurs éphémérides, puis des directions d'arrivée des signaux GNSS directs des satellites GNSS visibles sur un récepteur GNSS du satellite, et de l'écho perturbateur de réflexion spéculaire des signaux GNSS sur la surface sur laquelle se trouve la cible ;
   - corrélation E5, pour chaque satellite GNSS visible, de l'hypothèse de position de la cible, sur le code GNSS correspondant à ce satellite GNSS, et formation de faisceaux par l'antenne active en maximisant le gain de l'antenne active du satellite récepteur dans la direction d'arrivée des signaux issus de l'hypothèse de position de la cible, et en minimisant le gain de l'antenne active dans les directions d'arrivée des signaux directs des satellites GNSS visibles sur le récepteur GNSS et de l'écho perturbateur de réflexion spéculaire sur ladite surface sur laquelle se trouve la cible ;
   - détermination E6 au niveau du satellite récepteur du temps d'arrivée et de la variation temporelle de la phase d'arrivée attendus des signaux GNSS potentiellement réfléchis sur la cible, et moyenne sur les satellites GNSS visibles de la corrélation sur le code GNSS pour les temps d'arrivée et variation temporelle de la phase d'arrivée, à partir de la position orbitale dudit satellite récepteur et de ses évolutions et des positions orbitales des satellites GNSS visibles de l'hypothèse de position de la cible et de leurs évolutions ; et
   - moyenne E7 sur les segments temporels desdites moyennes de corrélation sur les satellites GNSS ;
   - détermination E8 de la présence de la cible à l'hypothèse de position par comparaison de ladite moyenne sur les segments temporels avec une valeur de référence.

La présente invention repose notamment sur l'utilisation d'une antenne active à plusieurs faisceaux au niveau du satellite récepteur ou des satellites récepteurs, en orbites basses ou LEO. Dans le cas d'une pluralité de satellites il faut également gérer les communications entre les différents satellites. L'utilisation d'un seul satellite récepteur pourra donc être privilégiée.

L'utilisation d'une antenne active permet notamment d'avoir une recombinaison cohérente des signaux dans une direction déterminée, ou direction d'une cible potentielle, permettant d'améliorer le gain dans cette direction à proportion du nombre d'antennes utilisées pour la recombinaison des signaux, mais également une annulation des signaux dans des directions jugées interférentes, notamment dans la direction de la réflexion spéculaire de chaque satellite GNSS pour se concentrer sur la réception des échos non spéculaires.

De plus, ces deux éléments pouvant être réalisés de manière dynamique et continue, adaptée aux déplacements relatifs des satellites GNSS, du satellite LEO porteur et des cibles (supposées fixes ou faiblement mouvantes) sur Terre, il est également possible d'augmenter le nombre de constellations utilisées, la formation de faisceau adaptative pouvant également être utilisée pour pallier les problèmes d'écho perturbateur de réflexion spéculaire des signaux GNSS sur la surface sur laquelle se trouve la cible ou "Near-Far effect" en langue anglaise, et d'augmenter les durées d'intégration (cohérente et/ou incohérente) et donc à nouveau gagner en sensibilité pour la détection de cibles.

La position orbitale du satellite récepteur peut être déterminée à partir du récepteur GNSS. Une évolution de position peut être calculée par une dérivée temporelle de la position.

La valeur de référence peut être prédéterminée ou adaptative.

La cible peut être un bateau sur une étendue d'eau ou une surface non couverte de glace à un Pôle de la Terre.

Le principe de l'invention est l'application d'une série de boucles imbriquées, appuyées sur les sorties de réception et de corrélations GNSS: Pour chaque position sur Terre, définie par une maille fonction du signal GNSS de plus forte résolution (de plus grande largeur de bande) :
∘ Si elle est n'est pas visible : rien
∘ Si elle devient visible : début de l'intégration
∘ Si elle termine sa visibilité : décision sur la présence d'une cible
∘ Si elle est en cours de visibilité :
   ▪ Pour chaque satellite GNSS :
      - Détermination du beamforming optimal permettant le pointage vers la réflexion sur cette source du signal émis par le satellite GNSS, et l'élimination du clutter de mer et des satellites visibles susceptibles de créer un Near-Far effect, à hauteur de N-2 satellites éliminés avec N nombre d'antennes ;
      - Détermination du temps et de la fréquence de réception attendues pour un tel signal réfléchi sur la cible d'après la position de la cible et les positions et vitesses des satellites LEO et GNSS ;
      - Corrélation cohérente de la réplique GNSS pour ce signal réfléchi attendu après beamforming ;
   ▪ Accumulation sur tous les satellites GNSS.

Un système selon l'invention de détection par satellite récepteur en orbite d'une cible possédant des caractéristiques de réflexion différentes de celles de la surface sur laquelle elle se trouve, par réflectométrie GNSS, est adapté pour mettre en œuvre le procédé tel que décrit ci-dessus.

## Revendications

1. Procédé itératif de détection par au moins un satellite récepteur en orbite d'une cible possédant des caractéristiques de réflexion différentes de celles de la surface sur laquelle elle se trouve, par réflectométrie GNSS, dans lequel les signaux GNSS réfléchis sont reçus par une antenne active du satellite récepteur comprenant une pluralité d'éléments d'antenne, comprenant une étape de détermination (E1) d'hypothèses de positions de la cible pour lesquelles on souhaite détecter la cible, **caractérisé en ce que** pour chaque hypothèse de position de la cible, on effectue les étapes de :
- détermination (E2) d'un intervalle temporel au cours duquel ladite hypothèse de position de la cible est visible du satellite récepteur, et découpage de cet intervalle temporel en segments temporels, pour chacun desquels on effectue les étapes de :
- détermination (E3) de la direction d'arrivée des signaux GNSS réfléchis issus de ladite hypothèse de position de la cible à partir de la position orbitale du satellite récepteur ;
- détermination (E4) de la position orbitale des satellites GNSS selon leurs éphémérides, puis des directions d'arrivée des signaux GNSS directs des satellites GNSS visibles sur un récepteur GNSS du satellite, et de l'écho perturbateur de réflexion spéculaire des signaux GNSS sur la surface sur laquelle se trouve la cible ;
- corrélation (E5), pour chaque satellite GNSS visible, de l'hypothèse de position de la cible, sur le code GNSS correspondant à ce satellite GNSS, et formation de faisceaux par l'antenne active du satellite récepteur en maximisant le gain de l'antenne active dans la direction d'arrivée des signaux issus de l'hypothèse de position de la cible, et en minimisant le gain de l'antenne active dans les directions d'arrivée des signaux directs des satellites GNSS visibles sur le récepteur GNSS et de l'écho perturbateur de réflexion spéculaire sur ladite surface sur laquelle se trouve la cible ;
- détermination (E6) du temps d'arrivée et de la variation temporelle de la phase d'arrivée attendus des signaux GNSS potentiellement réfléchis sur la cible, et moyenne sur les satellites GNSS visibles de la corrélation sur le code GNSS pour les temps d'arrivée et variation temporelle de la phase d'arrivée, à partir de la position orbitale dudit satellite récepteur et de ses évolutions et des positions orbitales des satellites GNSS visibles de l'hypothèse de position de la cible et de leurs évolutions ; et
- moyenne (E7) sur les segments temporels desdites moyennes de corrélation sur les satellites GNSS ;
- détermination (E8) de la présence de la cible à l'hypothèse de position par comparaison de ladite moyenne sur les segments temporels avec une valeur de référence.

2. Procédé selon la revendication 1, dans lequel la position orbitale du satellite récepteur est déterminée à partir d'un récepteur GNSS placé sur ledit satellite.

3. Procédé selon l'une des revendications précédentes, dans lequel la valeur de référence de l'étape de détermination (E8) de la présence de la cible est prédéterminée.

4. Procédé selon l'une des revendications 1 à 2, dans lequel la valeur de référence de l'étape de détermination (E8) de la présence de la cible est adaptative.

5. Procédé selon l'une des revendications précédentes, dans lequel la cible est un bateau sur une étendue d'eau.

6. Procédé selon l'une des revendications 1 à 5, dans lequel la cible est une surface non couverte de glace à un Pôle de la Terre.

7. Système de détection par satellite en orbite d'une cible possédant des caractéristiques de réflexion différentes de celles de la surface sur laquelle elle se trouve, par réflectométrie GNSS, adapté pour mettre en œuvre le procédé selon l'une des revendications précédentes.

## Patentansprüche

1. Iteratives Verfahren zur Detektion eines Ziels, durch mindestens einen Empfängersatelliten in der Umlaufbahn, welches Reflexionsmerkmale aufweist, welche sich von denjenigen der Oberfläche, an welcher es sich befindet, unterscheiden, mittels GNSS-Reflektometrie, wobei die reflektierten GNSS-Signale durch eine aktive Antenne des Empfängersatelliten empfangen werden, welche eine Vielzahl von Antennenelementen umfasst, umfassend einen Schritt des Bestimmens (E1) von Positionsannahmen des Ziels, für welche man das Ziel detektieren möchte, **dadurch gekennzeichnet, dass** man für jede Positionsannahme des Ziels folgende Schritte ausführt:
- Bestimmen (E2) eines Zeitintervalls, in dessen Verlauf die Positionsannahme des Ziels von dem Empfängersatelliten sichtbar ist, und Unterteilen dieses Zeitintervalls in Zeitsegmente, für welche man jeweils folgende Schritte ausführt:
- Bestimmen (E3) der Ankunftsrichtung der aus der Positionsannahme des Ziels stammenden reflektierten GNSS-Signale anhand der Umlaufposition des Empfängersatelli ten;
- Bestimmen (E4) der Umlaufposition der GNSS-Satelliten gemäß ihren Ephemeriden, und anschließend der Ankunftsrichtungen der direkten GNSS-Signale der GNSS Satelliten, die an einem GNSS-Empfänger des Satelliten sichtbar sind, und des Störechos der Spiegelreflexion der GNSS-Signale an der Oberfläche, an welcher sich das Ziel befindet;
- Korrelieren (E5), für jeden sichtbaren GNSS-Satelliten, der Positionsannahme des Ziels, über den diesem GNSS-Satelliten entsprechenden GNSS-Code, und Bilden von Strahlen durch die aktive Antenne des Empfängersatelliten unter Maximierung der Verstärkung der aktiven Antenne in der Ankunftsrichtung der aus der Positionsannahme des Ziels stammenden Signale, und unter Minimierung der Verstärkung der aktiven Antenne in den Ankunftsrichtungen der direkten Signale der an dem GNSS-Empfänger sichtbaren GNSS-Satelliten und des Störechos der Spiegelreflexionen an der Oberfläche, an welcher sich das Ziel befindet;
- Bestimmen (E6) der Ankunftszeit und zeitlichen Variation der Ankunftsphase der GNSS-Signale, welche potenziell an dem Ziel reflektiert werden, und Mitteln, über die sichtbaren GNSS-Satelliten, der Korrelation der Ankunftszeiten und der zeitlichen Variation der Ankunftsphase über den GNSS-Code, anhand der Umlaufposition des Empfängersatelliten und seiner Bewegungen und der Umlaufpositionen der von der Positionsannahme des Ziels sichtbaren GNSS-Satelliten und ihrer Bewegungen; und
- Mitteln (E7) der Korrelationsmittelwerte über die Zeitsegmente über die GNSS-Satelliten;
- Bestimmen (E8) des Vorhandenseins des Ziels an der Positionsannahme durch Vergleich des Mittelwertes über die Zeitsegmente mit einem Referenzwert.

2. Verfahren nach Anspruch 1, wobei die Umlaufposition des Empfängersatelliten anhand eines an dem Satelliten platzierten GNSS-Empfängers bestimmt wird.

3. Verfahren nach einem der vorhergehenden Ansprüche, wobei der Referenzwert des Bestimmungsschrittes (E8) des Vorhandenseins des Ziels vorbestimmt ist.

4. Verfahren nach einem der Ansprüche 1 bis 2, wobei der Referenzwert des Bestimmungsschrittes (E8) des Vorhandenseins des Ziels adaptiv ist.

5. Verfahren nach einem der vorhergehenden Ansprüche, wobei das Ziel ein Schiff auf einer Wasserfläche ist.

6. Verfahren nach einem der Ansprüche 1 bis 5, wobei das Ziel eine nicht mit Eis bedeckte Oberfläche an einem Pol der Erde ist.

7. System zur Detektion durch einen Satelliten in der Umlaufbahn eines Ziels, welches Reflexionseigenschaften aufweist, welche sich von denjenigen der Oberfläche, an welcher es sich befindet, unterscheiden, mittels GNSS-Reflektometrie, welches geeignet ist, das Verfahren nach einem der vorhergehenden Ansprüche umzusetzen.

## Claims

1. An iterative method for detecting, with at least one receiver satellite in orbit, a target possessing reflective properties that are different from those of the surface on which said target is found, by GNSS reflectometry, wherein the reflected GNSS signals are received by an active antenna of the receiver satellite comprising a plurality of antenna elements comprising a step of determining (E1) assumed positions of the target, for which positions it is desired to detect the target, **characterised in that**, for each assumed position of the target, the following steps are carried out:
- determining (E2) a time interval in which said assumed position of the target is visible from the receiver satellite, and dividing this time interval into time segments, for each of which the following steps are carried out:
- determining (E3) the direction of arrival of the reflected GNSS signals from said assumed position of the target on the basis of the orbital position of the receiver satellite;
- determining (E4) the orbital positions of the GNSS satellites from their ephemeris data, then the directions of arrival of the direct GNSS signals of the GNSS satellites visible on a GNSS receiver of the satellite, and of the disrupting echo of the specular-reflection of the GNSS signals on the surface on which the target is found;
- correlating (E5), for each visible GNSS satellite, the assumed position of the target, on the GNSS code corresponding to this GNSS satellite, and forming beams with the active antenna of the receiver satellite while maximising the gain of the active antenna in the direction of arrival of the signals from the assumed position of the target, and while minimising the gain of the active antenna in the directions of arrival of the direct signals of the GNSS satellites visible to the GNSS receiver and of the disrupting echo of the specular-reflection on said surface on which the target is found;
- determining (E6) the arrival time and the temporal variation in the arrival phase of the GNSS signals potentially reflected on the target, and averaging, over the visible GNSS satellites, the correlation in the GNSS code for the arrival times and temporal variation in the arrival phase, on the basis of the orbital position of said receiver satellite and of its evolutions and of the orbital positions of the GNSS satellites visible from the assumed position of the target and their evolutions; and
- averaging (E7), over the time segments, said averages of the correlation over the GNSS satellites;
- determining (E8) whether the target is present at the assumed position by comparing said average over the time segments with a reference value.

2. The method according to claim 1, wherein the orbital position of the receiver satellite is determined on the basis of a GNSS receiver placed on said satellite.

3. The method according to one of the preceding claims, wherein the reference value of the step of determining (E8) whether the target is present is preset.

4. The method according to one of claims 1 to 2, wherein the reference value of the step of determining (E8) whether the target is present is adaptive.

5. The method according to one of the preceding claims, wherein the target is a ship on a body of water.

6. The method according to one of claims 1 to 5, wherein the target is a surface not covered with ice at one of the Earth's poles.

7. A system for detecting, with a satellite in orbit, a target possessing reflective properties that are different from those of the surface on which it is found, by GNSS reflectometry, said system being suitable for implementing the method according to one of the preceding claims.
